# EUROPÄISCHE PATENTANMELDUNG

(11) **EP 1 900 659 A1**
(43) Veröffentlichungstag der Anmeldung: **19.03.2008**
(21) Anmeldenummer: 07017642.5
(22) Anmeldetag: 10.09.2007
(51) Int. Cl.: B65G 53/46, B65G 65/48

(54) **Austragvorrichtung für Schüttgut aus einem Schüttgutbehälter**

(30) Priorität: 13.09.2006 DE 102006042914
(71) Anmelder: Schenck Process GmbH, 64293 Darmstadt (DE)
(72) Erfinder: Hax, Heinz, 64823 Groß-Umstadt (DE)
(74) Vertreter: Blumbach - Zinngrebe

(57) **Zusammenfassung**

Beschrieben wird eine Austragvorrichtung für in einem Behälter (10) enthaltenes rieselfähiges und/oder fließfähiges Schüttgut wie etwa Zement oder Kohlenstaub oder Rohmehl, die an einer unteren Entnahmeöffnung des Behälters befestigt ist und eine Zellenradschleuse umfasst. Um die Austragleistung der Austragvorrichtung zu erhöhen, ist vorgesehen, dass an einem unteren Auslaufteil (10) des Behälters mehrere Zellenradschleusen (50,60) nebeneinander befestigt sind, wobei das Auslaufteil durch eine Bodenplatte (36) nach unten abgeschlossen ist, die eine der Anzahl der Zellenradschleusen gleiche Anzahl von Entnahmeöffnungen (53,63) für das Schüttgut aufweist, deren Größe und Anordnung den jeweiligen Schüttgut-Einläufen der Zellenradschleusen (50,60) entspricht.

## Beschreibung

Die Erfindung beschäftigt sich mit einer Austragvorrichtung für in einem Behälter enthaltenes rieselfähiges und/oder fließfähiges Schüttgut wie etwa Zement oder Kohlenstaub, die an einer unteren Entnahmeöffnung des Behälters befestigt ist und eine Zellenradschleuse umfasst.

Die Zellenradschleuse kann aus unterschiedlichen Bauarten bestehen: Das Schüttgut kann über einen Einlauf dem Zellenrad.bezüglich seiner Achse radial oder axial seitlich versetzt, beispielsweise tangential zugeführt werden, wie etwa in dem Dokument EP 1031014 B1 dargestellt. Im ersten Fall dreht bei an den Behälter angebauter Schleuse das Zellenrad in einer vertikalen Ebene, im zweiten Fall in einer horizontalen Ebene. Ist die Entnahmeöffnung in der Bodenplatte eines zylindrischen Auslaufteils des Behälters vorgesehen, empfiehlt sich eine seitlich versetzte axiale Zuführung des Schüttgutes, weil dann das Gehäuse des Zellenrades sich nahtlos an das Auslaufteil mit minimaler Bauhöhe anschließen kann.

Vor allem bei pulverförmigem Schüttgut ist im Behälter nahe der Entnahmeöffnung ein um die Achse des Auslaufteils drehangetriebener Rotor vorgesehen, welcher das Schüttgut vor seiner Entnahme durchmischt und auflockert Die Entnahmeöffnung ist dann oft wesentlich kleiner als die seitliche Ausdehnung der Bodenplatte.

Die maximale Austragleistung, das heißt die pro Zeiteinheit aus dem Behälter entnommene Schüttgutmenge, hängt einerseits von den Eigenschaften des Schüttgutes und andererseits apparativ bei vorgegebener Entnahmeöffnung und Gehäusedimensionierung im Wesentlichen von der Drehzahl des Zellenrades ab. Da die größte Drehzahl konstruktiv bedingt begrenzt ist, lässt sich die Austragleistung der Austragvorrichtungen der erwähnten Art nicht wesentlich vergrößern.

Der Erfindung liegt daher die Aufgabe zugrunde, die Austragleistung einer Austragvorrichtung zu erhöhen.

Die Lösung dieser Aufgabe gelingt mit dem Gegenstand des Patentanspruches 1. Bevorzugte Weiterbildungen der Erfindung sind in den abhängigen Patentansprüchen angegeben. So ist bei der eingangs genannten Vorrichtung erfindungsgemäß vorgesehen, dass am Auslaufteil mehrere Zellenradschleusen nebeneinander befestigt sind, deren Einlaufquerschnitte zusammen nicht größer als die lichte Weite des Auslaufteils ist, und dass das Auslaufteil durch eine Bodenplatte nach unten abgeschlossen ist, die eine der Anzahl der Zellenradschleusen gleiche Anzahl von Entnahmeöffnungen aufweist, deren Größe und Anordnung den jeweiligen Einläufen der Zellenradschleusen entspricht. Die Erfindung ermöglicht eine wesentliche Steigerung der gesamten Schüttgut-Austragleistung. Der für die weiteren Zellenradschleusen erforderliche zusätzliche Platzbedarf ist neben dem Auslaufteil üblicherweise vorhanden. Dabei braucht jede Zellenradschleuse die Bodenplatte nur soweit zu unterfassen, dass der jeweilige Einlauf unterhalb der zugehörigen Entnahmeöffnung liegt, zweckmäßig mit ihr fluchtet.

Bei den meisten Anwendungen der Erfindung können alle Zellenradschleusen von gleicher Bauart und Dimension sein. Diese Möglichkeit hat vor allem für eine Nachrüstung schon bestehender, mit einer Zellenradschleuse ausgerüsteter Austragvorrichtungen Bedeutung, weil diese erfindungsgemäße Ausführungsform zu keiner Veränderung der Bauhöhe und der Einbaulage führt. Im Rahmen der Erfindung ist es jedoch auch möglich, Zellenradschleusen unterschiedlicher Konstruktion einzusetzen.

Bei einer Ausgestaltung der Erfindung ist in dem Auslaufteil über der Bodenplatte ein horizontal drehender Rotor angeordnet, der das Schüttgut auflockert und in die Entnahmeöffnungen fördert. In weiterer Ausgestaltung der Erfindung ist ein vom Äußeren des Auslaufteils aus manuell oder motorisch betätigbarer Absperrschieber vorgesehen, welcher das Absperren oder Freigeben einer oder mehrerer Entnahmeöffnungen oder Einläufe ermöglicht.

Im Übrigen sind bevorzugte Ausführungen der Erfindung in den beigefügten Unteransprüchen angegeben. Ein Ausführungsbeispiel der Erfindung wird unter Bezugnahme auf die beigefügte Zeichnung im Einzelnen beschrieben. Es zeigen:
Figur 1 :eine schematische perspektivische Ansicht eines Behälters mit Austrag-vorrichtung;
Figur 2 : einen schematischen Axialschnitt durch die Vorrichtung nach Figur 1;
Figur 3 : eine Draufsicht auf eine schematische Einzelheit aus der Vorrichtung nach Figur 2;
Figur 4 : einen schematischen Axialschnitt eines Behälters mit Austragvorrichtung nach einer ersten Ausführungsform der Erfindung;
Figur 5 : eine schematische Draufsicht auf eine Einzelheit der Vorrichtung nach Figur 4 zur Erläuterung der Betriebsweise der Erfindung;
Figur 6 : eine der Figur 5 ähnliche Draufsicht auf eine Einzelheit der Erfindung nach einer zweiten Ausführungsform derselben;
Figur 7 : einen schematischen Axialschnitt durch einen Teil der Vorrichtung nach Figur 4 zur Erläuterung der Funktion eines Absperrschiebers aus der Vorrichtung; und
Figur 8 : eine der Figur 7 ähnliche Darstellung einer Modifikation des Absperr-schiebers nach Figur 7.

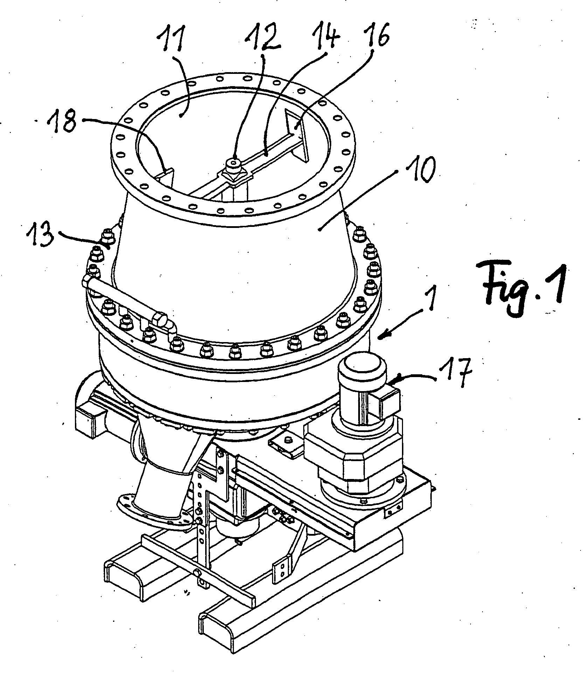

Figur 1 zeigt zunächst den unteren, sich nach unten konisch erweiternden Teil 10 eines im Übrigen nicht dargestellten Behälters, der im Betrieb mit Kohlenstaub oder Zement oder Rohmehl oder dergleichen fließfähigem Schüttgut gefüllt ist. Auf einer zentralen, vertikalen Welle 12 ist wenigstens ein zweiflügeliger Auflockerungsrührer 14 innerhalb des Teiles 10 befestigt, dessen endständige, aufrechte Bleche 16, 18 bei Drehung des Auflockerungsrührers 14 dicht an der Innenfläche 11 des Teiles 10 entlang streichen. Mit einem unteren Ringflansch 13 ist das Teil 10 auf einer im Ganzen mit 1 bezeichneten, runden Austragvorrichtung dichtend befestigt, die die gleiche seitliche Ausdehnung hat wie das Teil 10 am Ringflansch 13.

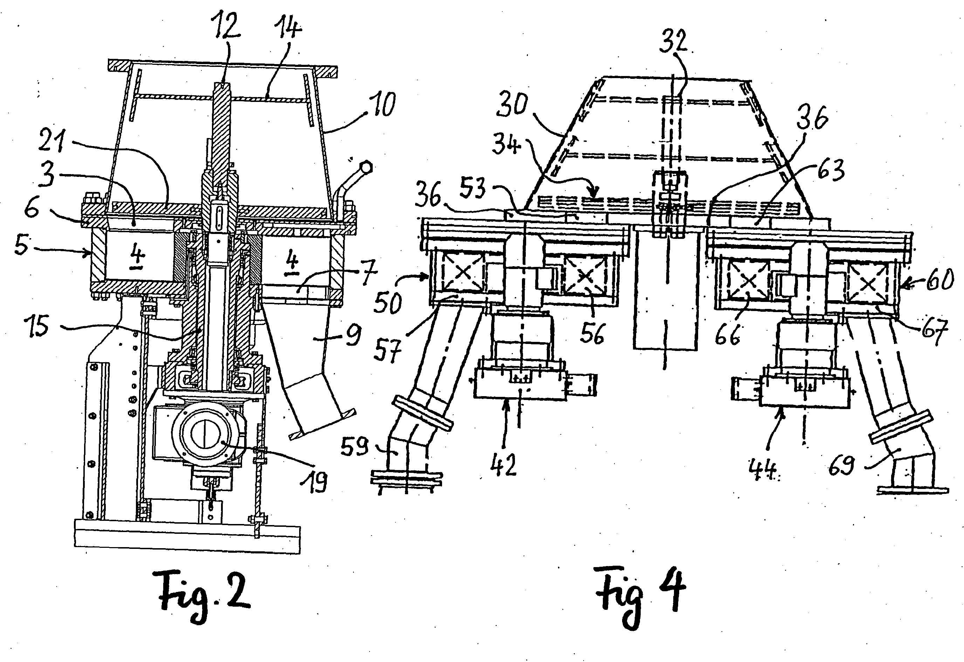

Ein wesentlicher Bestandteil der Austragvorrichtung 1 ist eine Zellenradschleuse 5, deren Ringkammer 4 durch eine Einlaßöffnung 3 für das Schüttgut in ihrem Deckel 6 zum Teil 10, und durch eine Auslaßöffnung 7 für das Schüttgut in ihrem Boden 8 zu einem Abwurfschacht 9 offen ist, wobei die Auslaßöffnung 7 zur Einlaßöffnung 3 in Umfangsrichtung um etwa 180° versetzt ist. Durch den zentralen Teil der Schleuse 5 erstreckt sich die Welle 12 zum Antrieb des Auflockerungsrührers 14. Ferner befinden sich am zentralen Teil der Schleuse 5 Antriebselemente wie etwa Getrieberäder für den rotatorischen Antrieb der im Einzelnen nicht dargestellten Zellenradflügel parallel zur Welle 12 innerhalb der Ringkammer 4. Die Antriebselemente stehen über eine die Welle 12 umgebende Hülse 15 sowie weitere, Drehung übertragende Elemente mit einem Motor 17 in antriebsmäßiger Verbindung. Gemäß Figur 1 ist der Motor 17 seitlich neben der Zellenradschleuse stehend angeordnet, während der Antriebsmotor 19 für die Welle 12 zentral unterhalb der Zellenradschleuse 5 sitzt (Figur 2).

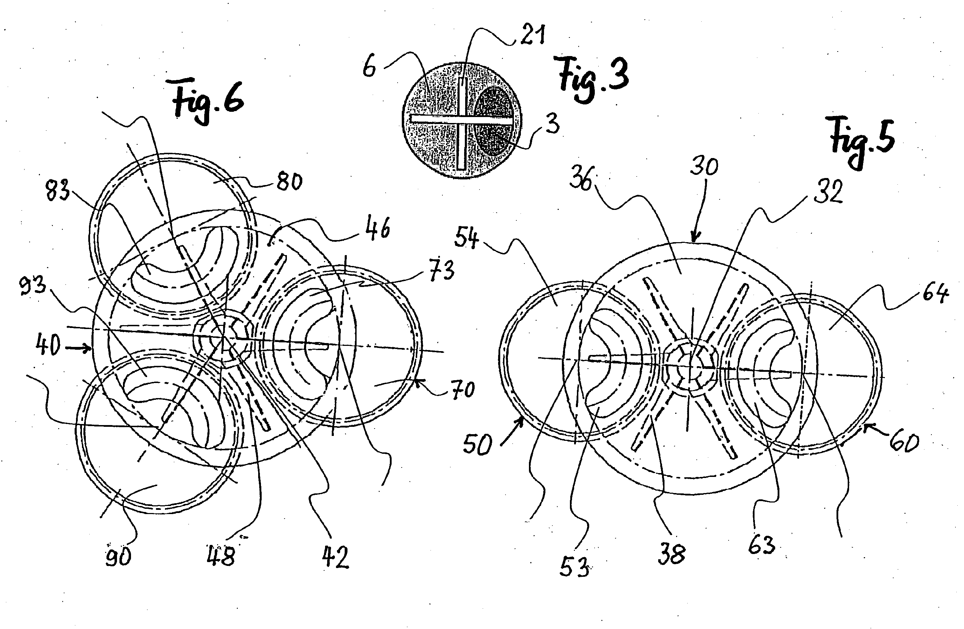

Das Schaubild der Figur 3 erläutert, dass die Einlaßöffnung 3 ovale Gestalt hat und lediglich etwa nur eine Hälfte des Deckels 6 ausmacht, wobei die Längsrichtung der Einlaßöffnung 3 ungefähr in Drehrichtung eines weiteren, vierflügeligen Rührers 21 weist. Die vier den Rührer 21 bildenden Flügel sind an der Welle 12 dicht oberhalb des Deckels 6 kreuzweise befestigt, so dass der drehende Rührer 21 auf dem Deckel 6 liegendes und von ihm aufgelockertes Schüttgut durch die Einlaßöffnung 3 in die Zellenradschleuse 5 fördert.

Bei der vorstehend beschriebenen Gestaltung ist die Zellenradschleuse 5 in axialer Ausrichtung mit der Welle 12 konzentrisch an dem Behälterteil 10 befestigt (Figuren 1, 2). Figur 4 zeigt eine Ausführung, bei der der Behälterteil 30 und der an der Welle 32 befestigte weitere Rührer 34 zwei nebeneinander an dem Behälterteil 30 außermittig befestigte Zellenradschleusen 50, 60 mit Schüttgut bedienen kann. Die Zellenradschleusen 50 und 60 sind untereinander sowie mit der Zellenradschleuse 5 funktional gleich insofern, als das Schüttgut in jede der Schleusen 50, 60 wie auch in die Schleuse 5 axial (das heißt parallel zur Welle 32) durch eine Einlaßöffnung 53, 63 in eine Ringkammer 56, 66 gelangt, von dem jeweiligen Zellenrad in den Schleusen 50, 60 innerhalb der Ringkammer 56, 66 zu einer Auslaßöffnung 57, 67, die relativ zur zugehörigen Einlaßöffnung in Umfangsrichtung um etwa 180° versetzt ist, gefördert wird und aus der Ringkammer 56, 66 axial in je einen Abwurfschacht 59, 69 gelangt. Wenn, wie bei der vorliegenden Ausführungsform, die Schleusen 50, 60 im Durchmesser ebenso dimensioniert sind wie die Schleuse 5, unterfassen die Schleusen den Behälterteil 30 nur im Bereich ihrer Einlaßöffnungen 53, 63 und stehen mit ihrem restlichen Abschnitt mit den Auslaßöffnungen 57, 67 und den Abwurfschächten 59, 69 diametral seitlich über den Umriß des Behälterteils vor. Dabei ist unterhalb jeder der Schleusen 50, 60 zentral je ein separater Antriebsmotor 42, 44 befestigt, der zum rotatorischen Antrieb des jeweiligen Zellrades mit letzterem gekoppelt ist.

Wie man aus Figur 5 erkennt, ist dazu der Behälterteil 30 mit einem eigenen unteren Boden 36 abgeschlossen, der zwei bezüglich der Welle 32 gegenüberliegende gebogene und zur Welle 32 konvexe Durchbrüche aufweist. Diese Durchbrüche sind die vorstehend erwähnten Einlaßöffnungen 53, 63. Mit der Welle 32 ist ein Rührer 38 drehfest verbunden, der mit sechs gleich beabstandeten Flügeln versehen ist und das auf dem Boden 36 liegende Schüttgut auflockert und in die Einlaßöffnungen 53 und 63 fördert. Die Schleusen 50, 60 besitzen Deckel 54, 64, die unter dem Boden 36 befestigt sind und und Öffnungen besitzen, die den Einlaßöffnungen 53, 63 entsprechen.

Da die Bauhöhen der Schleusen 5, 50 und 60 etwa gleich sind, gewinnt man den Vorteil, dass die Einbaulagen weder des Behälterteils 10 noch der Abwurfschächte 9, 59, 69 sowie der an diese gegebenenfalls angeschlossenen Baugruppen, wie etwa Wägevorrichtungen, nicht verändert werden müssen, wenn die Austragvorrichtung nach Figuren 1 und 2 durch die Austragvorrichtung gemäß. Figur 4 ersetzt und damit in ihrer Austragleistung auf etwa das Doppelte erweitert wird. Lediglich die seitliche Ausladung dieser Ausführungsform ist größer durch die seitlich gegenüberliegend über den Behälterteil 30 vorstehenden Teile der Schleusen 50, 60 und der zugehörigen Abwurfschächte 59, 69.

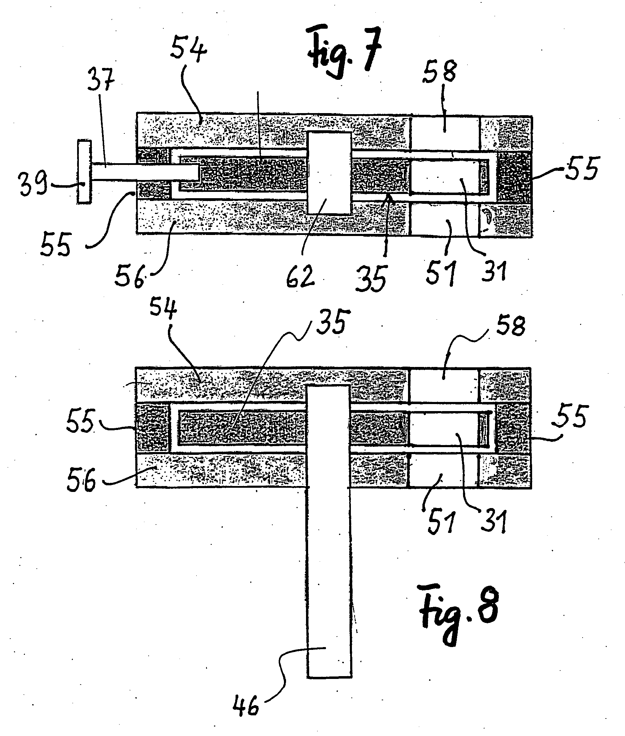

Figur 6 schließlich zeigt eine Ausführungsform, bei der unter dem Boden 46 eines Behälterteils 40 drei in Umfangsrichtung gleich beabstandete Zellenradschleusen 70, 80, 90 befestigt sind, die mit den vorgenannten Zellenradschleusen 5, 50, 60 im Wesentlichen baugleich sind. Der Boden 46 weist dazu drei gleichartige gleich beabstandete, gleich gebogene und zur Welle 42 konvexe Durchbrüche als Einlaßöffnungen 73, 83, 93 für die Schleusen 70, 80, 90 auf, in welche ein sechsarmiger Rührer 48 im Behälterteil 40 auf dem Boden 46 aufliegendes Schüttgut fördert. Die nicht dargestellten Abwurfschächte liegen den Einlaßöffnungen jeweils diametral gegenüber. Mit dieser Ausführung der Austragvorrichtung lässt sich die Austragleistung gegenüber derjenigen der anfangs beschriebenen Ausführung bei gleicher Bauhöhe auf etwa das Dreifache steigern. Alternativ lassen sich bis zu drei verschiedene Schüttgut-Verbraucher durch diese Ausführung einer einzigen Austragvorrichtung bedienen.

Da die an die Austragvorrichtung angeschlossenen Verbraucher zeitlich durchaus unterschiedlichen Bedarf an Schüttgut haben können, empfiehlt sich der Einbau von motorisch oder von Hand verstellbaren Absperrschiebern unter dem Boden 36, 46 des Behälterteils 30, 40 für die Einlaßöffnungen 53, 63, 73, 83, 93.

Gestaltungsmöglichkeiten hierzu sind in den Figuren 7 und 8 angedeutet.

Der. Absperrschieber wird nachstehend lediglich im Zusammenhang mit der Zellenradschleuse 50 genauer beschrieben. Die zu erläuternde Struktur gilt in entsprechender Anpassung auch für jede der vorstehend erklärten Zellenradschleusen. In einem Zwischenraum, der im Axialschnitt rechteckigen Querschnitt hat und oben durch die Deckplatte 54 und unten durch eine zur Deckplatte 54 parallele und gleich große Zwischenplatte 56 sowie einen äußeren metallischen Dichtring 55 umgrenzt ist, ist ein scheibenförmiger Absperrschieber 35 parallel zur Deckplatte um einen Zapfen 62 drehbar, der senkrecht zur Deckplatte 54 der Schleuse 50 angeordnet ist. Der Absperrschieber 35 füllt den Zwischenraum im Wesentlichen staubdicht aus und weist einen der Einlaßöffnung 53 sowie einer entsprechenden Öffnung 58 in der Deckplatte 54 in Größe und Anordnung gleichen Durchlaß 31 auf. In den Figuren 7 und 8 ist der Zwischenraum zur Verdeutlichung wesentlich größer dargestellt als der Querschnitt des Schiebers 35. Wie Figur 7 zeigt, ist an der Peripherie des Schiebers ein radial abstehender Stiel 37 angebracht, welcher sich durch einen Umfangsschlitz in dem Dichtring 55 nach außen erstreckt und in einem Handgriff 39 endet. Nach Figur 8 sind Stiel 37 und Handgriff 39 ersetzt durch eine Ankopplung des Zapfens 62 an den Antriebsmotor 42 für das Zellenrad der Schleuse 50 über eine Welle 46 sowie über ein nicht dargestelltes zu- und abschaltbares Untersetzungsgetriebe oder dergleichen Übertragungsglied. Durch deren Zu- oder Abschaltung (oder alternativ durch Betätigen des Handgriffs 39) ist eine rotatorische Verstellung des Absperrschiebers 35 im Sinne eines Verschlusses, einer Teilöffnung oder vollen Öffnung der Einlaßöffnung 53 möglich.

Mit der Erfindung sind Förderleistungen bis zu etwa 90 t/h an Schüttgut erzielbar.

## Patentansprüche

1. Austragvorrichtung für in einem Behälter enthaltenes rieselfähiges und/oder fließfähiges Schüttgut wie etwa Zement oder Kohlenstaub oder Rohmehl, die an einer unteren Entnahmeöffnung des Behälters befestigt ist und eine Zellenradschleuse umfasst, **dadurch gekennzeichnet, dass** an einem unteren Auslaufteil (10, 30) des Behälters mehrere Zellenradschleusen (50, 60; 70, 80, 90) nebeneinander befestigt sind, wobei das Auslaufteil durch eine Bodenplatte (36, 46) nach unten abgeschlossen ist, die eine der Anzahl der Zellenradschleusen gleiche Anzahl von Entnahmeöffnungen (53, 63; 73, 83, 93) für das Schüttgut aufweist, deren Größe und Anordnung den jeweiligen Schüttgut-Einläufen der Zellenradschleusen entspricht.

2. Vorrichtung nach Anspruch 1, **dadurch gekennzeichnet, dass** alle Zellenradschleusen im Wesentlichen gleiche Bauhöhe aufweisen.

3. Vorrichtung nach Anspruch 1 oder 2, **dadurch gekennzeichnet, dass** alle Zellenradschleusen im Wesentlichen gleiche Bauart haben.

4. Vorrichtung nach einem der vorstehenden Ansprüche, **dadurch gekennzeichnet, dass** in dem Auslaufteil sich zentral eine motorisch drehangetriebene Welle (32) erhebt, an welcher dicht über dem Boden (46) ein Rührer (21) befestigt ist.

5. Vorrichtung nach einem der vorstehenden Ansprüche, **dadurch gekennzeichnet, dass** jede Zellenradschleuse mit einem eigenen Motor zum Antrieb des der Zellenradschleuse zugehörigen Zellenrades versehen ist.

6. Vorrichtung nach einem der vorstehenden Ansprüche, **dadurch gekennzeichnet, dass** für jede Zellenradschleuse ein eigener Absperrschieber (35) für die der Zellenradschleuse zugeordnete Einlaßöffnung (53, 63; 73, 83, 93) vorgesehen ist.

7. Vorrichtung nach Anspruch 6, **dadurch gekennzeichnet, dass** der Absperrschieber von Hand (37, 39) zur Freigabe, oder zum teilweisen oder vollständigen Verschluß der Einlaßöffnung betätigbar ist.

8. Vorrichtung nach Anspruch 6, **dadurch gekennzeichnet, dass** der Absperrschieber durch Steuerung eines mit dem Absperrschieber gekoppelten Motors (42) betätigbar ist.

9. Vorrichtung nach Anspruch 8, **dadurch gekennzeichnet, dass** der Motor der Antriebsmotor für das Zellenrad ist.
